# EUROPEAN PATENT SPECIFICATION

(11) **EP 2 645 493 B1**
(45) Date of publication and mention of the grant of the patent: **27.01.2021**
(21) Application number: 11842571.9
(22) Date of filing: 25.11.2011
(51) Int. Cl.: H01S 3/00, H01S 5/00, B23K 26/06, B23K 26/064, B23K 26/70, H01S 3/23

(54) **LASER ANTIREFLECTION DEVICE AND LASER APPARATUS COMPRISING SAME**
ANTIREFLEKTIERENDE LASERVORRICHTUNG UND LASERVORRICHTUNG DAMIT
DISPOSITIF ANTIREFLET LASER ET APPAREIL LASER LE COMPRENANT

(30) Priority: 26.11.2010 CN 201010570924; 26.11.2010 CN 201010559809; 08.12.2010 CN 201020646694 U
(43) Date of publication of application: 02.10.2013
(73) Proprietor: BEIJING LUHE FEIHONG LASER S&T CO., LTD., Bejing 101102 (CN)
(72) Inventor: WANG, Zhiyong, Shanxi 041600 (CN); QIN, Wenbin, Shanxi 041600 (CN); CAO, Yinhua, Shanxi 041600 (CN); DAI, Jingjing, Shanxi 041600 (CN); GE, Tingwu, Shanxi 041600 (CN)
(74) Representative: Epping - Hermann - Fischer
(86) International application number: PCT/CN2011/082983
(87) International publication number: WO 2012/069017

(56) References cited:
- CN-A- 1 162 812
- CN-A- 1 487 264
- CN-A- 101 493 582
- CN-A- 102 055 127
- CN-A- 102 064 464
- CN-U- 201 946 875
- CN-U- 201 966 481
- DE-A1- 3 642 386
- JP-A- H02 207 991
- JP-A- S60 158 993
- JP-A- 2009 116 181
- JP-A- 2010 263 063
- US-A1- 2002 181 343
- US-A1- 2005 094 146
- US-A1- 2008 121 626
- US-B1- 6 369 377

## Description

### Field of the Invention

The present invention relates to laser apparatuses (see claims 1 and 7 respectively). The present invention belongs to the laser technology field.

### Background

Laser processing is a high and new technology developed rapidly not only for punching, marking, cutting, welding and heat treating, but also for fine machining. Laser processing, so to speak, has been applied in almost all industries, and has shown unique advantages, particularly in non-ferrous metal material processing. Lasers are the core elements of a laser processing system, and largely determine the quality of the laser processing.

At present, lasers used for laser processing include CO₂ lasers, Nd:YAG solid lasers, semiconductor lasers, optical fiber lasers and so on. CO₂ lasers occupy over 85% market share in the cutting field, they emit laser light with a wavelength of 10.6µm. Nd:YAG solid lasers emit laser light with a wavelength of 1µm, which is shorter than that of CO₂ lasers, thus the laser light is easier to be absorbed by common metal materials. However, Nd:YAG lasers have a relatively large volume and a limited output power. Semiconductor lasers and optical fiber lasers have a promising application perspective due to their small volume, long lifetime, high efficiency, high-quality light beam, simple maintenance and the ability to normally operate in harsh environments such as high temperature, high pressure, high vibration and high impact. Up to now, this type of lasers have been greatly improved in output power and beam quality. For example, optical fiber lasers have now realized a power output on the order of kilowatts.

During the laser processing of a workpiece, when a high energy laser beam reaches the surface of a workpiece with low optical absorptivity or high surface smoothness, the surface of the workpiece may reflect a large amount of laser energy and a part of reflected light might return to the laser along the original light path. In the case of a CO₂ laser, the laser reflection may cause the drop of the laser power, the instability of the laser output, the change of the laser mode, and even the damage of the resonant cavity of the CO₂ laser. In the case of a semiconductor laser, due to the high power density of the laser beam, the reflected light returning to the light emitting chip of the semiconductor laser may generate a large amount of heat in a short time, and thus burn the chip of the semiconductor laser. In the case of an optical fiber laser, the reflected laser light may focus on the end surface of the outgoing optical fiber via the optical system to burn the fiber or even to reach the laser through the fiber, resulting in Q-switching and thus giant pulses output from the laser, all of which might impact the stability of the workpiece processing or damage the optical fiber laser.

Document US 2008/121626 A1 (relevant prior art for claims 1 and 7) relates to an apparatus for dynamic surface annealing of a semiconductor wafer. The apparatus includes a source of laser radiation emitting at a laser wavelength and comprising an array of lasers arranged in rows and columns. The optical power of each the laser is individual adjustable and optics are provided for focusing the radiation from the array of lasers into a narrow line beam in a workpiece plane corresponding to a workpiece surface.

Document JP 2009 116181 A discloses an optical isolator for laser machining having compact and inexpensive constitution. In the optical isolator, a first branching and coupling part, a Faraday rotator, a 1/2 wavelength plate and a second coupling and branching part are arranged in a line in this order in a propagating direction of the laser beam for machining.

Document JP 2010 263063 A discloses a laser irradiation device in order to provide a structure for cutting off return light. Each of a plurality of laser diode arrays emits a laser beam having a beam cross-section long in the long-axis direction. A rearrangement optical system rearranges the laser beams so that each of the laser beams emitted from the laser diode arrays are transmitted in a first direction. The long-axis directions of the beam cross-section are set parallel to one another and arranged in the short-axis direction orthogonal to the long axis; and the polarization planes of the respective laser beams are aligned with one another.

Document JP S60 158993 A discloses a laser working device to enable monitoring of the intensity of incident light on a work even during working. The laser working device comprises a laser oscillator emitting polarized laser light constituted of a partial transmission mirror, a reflecting mirror and a total reflecting mirror for the polarized wave. A polarizing splitter constituted to allow passage of the polarized wave component is provided between the oscillator and a quarter-wave plate. The exit light past the splitter is circularly polarized by the plate and is then made incident as incident light on a work, by which working is executed.

In order to ensure the normal operation of the lasers and extend their lifetime, it is desirable to prevent a reflected light from damaging the lasers. At present, laser anti-reflection devices mainly include optical isolators utilizing the Faraday optical rotation effect. However, this type of optical isolator cannot withstand high-power laser irradiation, and can only work for low power lasers. Therefore, it is desired to have an anti-reflection device working for high power lasers (such as lasers with a power of hundreds up to a thousand Watts).

On the other hand, during processing, it is possible to make the processed surface of a workpiece incline relative to the output end face of the laser by an certain angle (e.g., 10 degrees or so), thereby preventing the reflected light from returning to the laser along the original path. Although this practice can prevent the reflected light from damaging a laser, it limits the application of some processes. Furthermore, a local molten pool formed by the laser on the surface of the workpiece during the processing randomly flows, thus the reflection surface keeps changing randomly, therefore the reflected light may still have a chance to return to the laser and damage it. Furthermore, a method for measuring the reflected light in real time can be used to monitor the reflected light, but it cannot really prevent the reflected light from damaging the laser after all.

### Summary

### Technical problem

An object of the present invention is to provide laser apparatuses incorporating laser anti-reflection device(s) for separating the laser beam returning to said laser along the original path due to workpiece reflection during workpiece processing, thus preventing it from damaging the laser.

### Technical Solution

To achieve the above-mentioned object, a laser apparatus incorporating an anti-reflection device according to appended claim 1 is provided. A laser anti-reflection device, comprises: a polarizing beam splitter, a λ/4 wave plate and an absorber, wherein said polarizing beam splitter and said λ/4 wave plate are configured to be disposed in the outgoing light path of a laser emitting a linearly polarized light beam with a wavelength of λ, such that the linearly polarized light beam exiting from the laser first passes the polarizing beam splitter, then passes the λ/4 wave plate and becomes a circularly polarized light beam, the circularly polarized light beam reaches a workpiece to be processed, a part of the circularly polarized light beam reflected from the workpiece returns along the original light path, passes the λ/4 wave plate and becomes a linearly polarized light beam with a polarization direction perpendicular to that of the outgoing linearly polarized light beam, the linearly polarized light beam deviates from the light path of the outgoing linearly polarized light beam after it passes the polarizing beam splitter and reaches the absorber.

Said polarizing beam splitter is a coated mirror or a prism and realizes a polarizing beam splitter transmitting P linearly polarized light and reflecting S linearly polarized light or a polarizing beam splitter transmitting S linearly polarized light and reflecting P linearly polarized light.

Preferably, said λ/4 wave plate may be a transmissive λ/4 wave plate or a reflective λ/4 wave plate.

Preferably, said absorber may be a perfect absorber for the linearly polarized light beam illuminating thereon with its light absorption surface forming an arbitrary angle with the linearly polarized light beam, or said absorber may be a partial absorber for said linearly polarized light beam illuminating thereon with its light absorption surface forming a non-right angle with the linearly polarized light beam.

The laser anti-reflection device of the laser apparatus as mentioned above is disposed in the outgoing light path of said laser for separating the laser beam returning to said laser along the original path due to workpiece reflection during workpiece processing.

Preferably, the above mentioned laser apparatus incorporating an anti-reflection device may further comprise: one or more systems of an optical collimation system disposed between said laser and said laser anti-reflection device, an optical focusing system disposed between said laser anti-reflection device and said workpiece to be processed, and at least one reflection or refraction systems disposed between said laser and said workpiece to be processed.

Said laser is a CO₂ laser.

Furthermore, said polarizing beam splitter is a coated mirror or prism in which a polarization light splitting film is coated on a ZnSe or GaAs substrate. Further, preferably, said λ/4 wave plate may be a bronze mirror plated with a λ/4 retardation film and/or said reflection or refraction system may be a reflective bronze mirror. More preferably, said bronze mirror plated with a λ/4 retardation film and/or said reflective bronze mirror may be provided with a cooling water pipe.

According to the present invention, there is also provided a laser apparatus incorporating anti-reflection devices as defined in claim 7. comprising: N lasers, wherein N is a natural number, N≥ 2, and the i^{th} laser emits linearly polarized light with a wavelength of λᵢ, i being a natural number, 1≤i≤N; N laser anti-reflection devices, wherein the i^{th} laser anti-reflection device corresponds to the i^{th} laser and is disposed in the outgoing light path of the laser; and at least N-1 beam combiners, wherein the j^{th} beam combiner corresponds to the j^{th} laser, j being a natural number, 2≤j≤N, the j^{th} beam combiner reflects or refracts light with a wavelength of λⱼ and transmits light with a wavelength of λᵢ, wherein 1≤i<j≤N, wherein, the linearly polarized light beams emitted from said N lasers pass their corresponding laser anti-reflection devices, respectively, and then pass their corresponding beam combiners, respectively, before they are combined into one beam of light and reach the workpiece to be processed, wherein if the first laser corresponds to no beam combiner, then the linearly polarized light beam emitted from the first laser passes its corresponding laser anti-reflection device and directly merges into the light beams exiting from other lasers, passing their respective corresponding laser anti-reflection devices and their respective corresponding beam combiners to form one beam of light.

Preferably, the above mentioned laser apparatus incorporating an anti-reflection device may further comprise a first beam combiner corresponding to said first laser and reflecting or refracting light with a wavelength of λ₁.

### Advantageous Effects

In summary, the laser anti-reflection device provided in the present invention can separate the laser beam returning to the laser along the original path due to workpiece reflection during workpiece processing, thereby preventing it from damaging the laser. The laser anti-reflection device is particularly suitable for high power lasers. In addition, a laser apparatus containing the laser anti-reflection device can have high stability and long lifetime.

### Brief Description of Drawings

Fig. 1 is a schematic diagram showing the light path structure of a laser anti-reflection device;
Fig. 2 is a schematic diagram showing the light path structure of a laser anti-reflection device;
Fig. 3 is a schematic diagram showing the light path structure of a laser anti-reflection device;
Fig. 4 is a schematic diagram showing the light path structure of a laser anti-reflection device;
Fig. 5 is a schematic diagram showing the light path structure of a laser apparatus incorporating a laser anti-reflection device according to the present invention;
Fig. 6 is a schematic diagram showing the light path structure of a laser apparatus incorporating a laser anti-reflection device;
Fig. 7 is a schematic diagram showing the light path structure of a laser apparatus incorporating a laser anti-reflection device;
Fig. 8 is a schematic diagram showing the light path structure of a laser apparatus incorporating a laser anti-reflection device; and
Fig. 9 is a schematic diagram showing the light path structure of a laser apparatus incorporating a laser anti-reflection device according to another embodiment of the present invention.

### Detailed Description

Embodiments of the laser anti-reflection device and the laser apparatus including the same according to the present invention will be described below with reference to accompanying drawings. Those of ordinary skills in the art will appreciate that the described embodiments may be modified in various ways or combinations thereof without departing from the scope of the present invention. Therefore, the drawings and the description are illustrative in nature, and are not intended to limit the scope of claims. Furthermore, in the description, the drawings are not drawn to scale and the same reference numerals denote the same or similar parts.

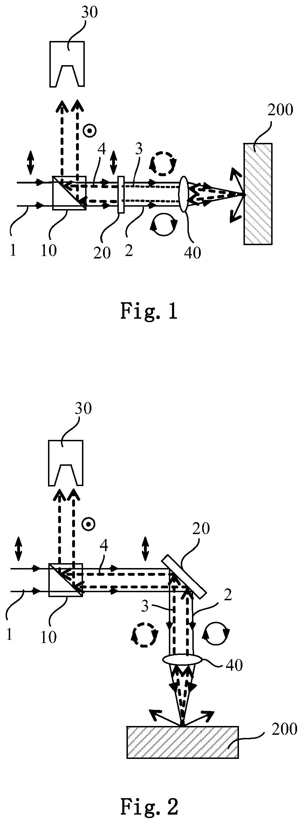

Firstly, a laser anti-reflection device will be described with reference to Figs. 1 to 4. Generally, the laser anti-reflection device includes: a polarizing beam splitter, a λ/4 wave plate and an absorber, wherein said polarizing beam splitter and said λ/4 wave plate are provided to be disposed in the outgoing light path of a laser emitting a linearly polarized light beam with a wavelength of λ. The linearly polarized light beam exiting from the laser first passes the polarizing beam splitter, then passes the λ/4 wave plate and thus becomes a circularly polarized light beam. The circularly polarized light beam reaches a work piece to be processed, and a part of it reflected from the work piece returns along the original light path and passes the λ/4 wave plate, and thus becomes a linearly polarized light beam with polarization direction perpendicular to that of the outgoing linearly polarized light beam. The linearly polarized light beam deviates from the light path of the outgoing linearly polarized light beam and reaches the absorber after it passes the polarizing beam splitter.

Said polarizing beam splitter may be a coated mirror or prism as far as the structure type is concerned, and may be a polarizing beam splitter transmitting P linearly polarized light and reflecting S linearly polarized light or a polarizing beam splitter transmitting S linearly polarized light and reflecting P linearly polarized light as far as the polarization state is concerned. Said λ/4 wave plate may be a transmissive λ/4 wave plate or a reflective λ/4 wave plate. Said absorber may be a perfect absorber for the linearly polarized light beam illuminating thereon with its light absorption surface forming an arbitrary angle with the linearly polarized light beam, or said absorber may be a partial absorber for said linearly polarized light beam illuminating thereon with its light absorption surface forming a non-right angle with the linearly polarized light beam.

### Example 1, not falling under the scope of the present invention

Fig. 1 is a schematic diagram showing the light path structure of the laser anti-reflection device. As shown in Fig. 1, the laser anti-reflection device includes a polarizing beam splitter 10 and a λ/4 wave plate 20 disposed in the outgoing light path of a laser emitting a linearly polarized light beam 1 with a wavelength of λ, and an absorber 30. The linearly polarized light beam 1 is a P linearly polarized light with a polarization state shown in Fig. 1 by a two-way arrow. The polarizing beam splitter 10 is made of a prism and is a polarizing beam splitter transmitting P linearly polarized light and reflecting S linearly polarized light. The λ/4 wave plate 20 is a transmissive wave plate.

The linearly polarized light beam 1 (P linearly polarized light) exiting from the laser first passes the polarizing beam splitter 10 (still P linearly polarized light now), and then passes the λ/4 wave plate, thus becomes a circularly polarized light beam 2 with a polarization state shown in Fig. 1 by a solid line circle with arrow. The circularly polarized light beam 2 may be focused by a focusing lens 40 before hitting a workpiece 200 to be processed. A part of the circularly polarized light beam 3 reflected from the workpiece 200 to be processed (with a polarization state shown in Fig. 1 by a broken line circle with arrow) returns along the original light path and passes the λ/4 wave plate to become a linearly polarized light beam 4 (S polarized light with a polarization state shown in Fig. 1 by a circle with dot) with a polarization direction perpendicular to that of the exiting linearly polarized light beam 1. Since the polarizing beam splitter 10 is a polarizing beam splitter transmitting P and reflecting S polarized light, the linearly polarized light beam 4 deviates from the light path of the exiting linearly polarized light beam 1 after passing the polarizing beam splitter 10, and reaches the absorber 30, which makes the laser free from damage caused by the reflected light.

### Example 2, not falling under the scope of the present invention

Fig. 2 is a schematic diagram showing the light path structure of the laser anti-reflection device. As shown in Fig. 2, the configuration is identical with that in example except that the λ/4 wave plate 20 is a reflective wave plate, and therefore detail description will be omitted here.

### Example 3, not falling under the scope of the present invention

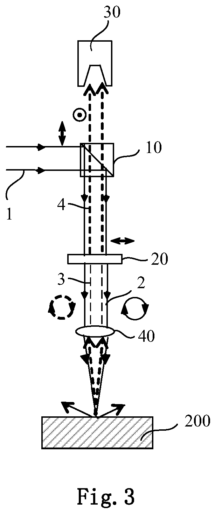

Fig. 3 is a schematic diagram showing the light path structure of the laser anti-reflection device. As shown in Fig. 3, the configuration is identical with that in example except that the polarizing beam splitter 10 is a polarizing beam splitter transmitting S and reflecting P linearly polarized light, therefore detail description will be omitted here.

### Example 4, not falling under the scope of the present invention

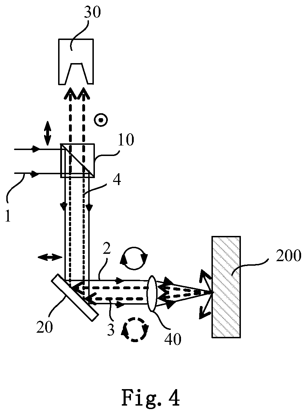

Fig. 4 is a schematic diagram showing the light path structure of the laser anti-reflection device. As shown in Fig. 4, in this embodiment, the configuration is identical with that in example except that the polarizing beam splitter 10 is a polarizing beam splitter transmitting S and reflecting P linearly polarized light, and the λ/4 wave plate 20 is a reflective wave plate, therefore detail description will be omitted here.

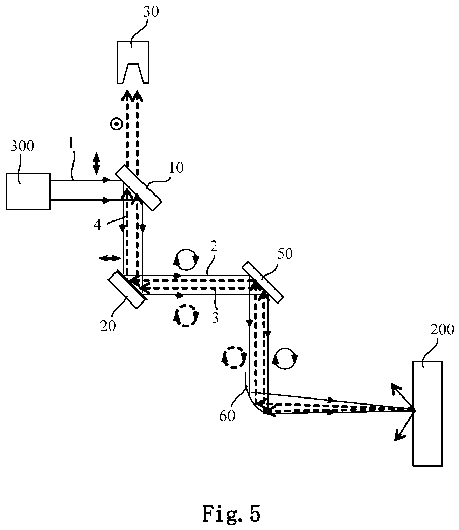

The laser apparatus incorporating the anti-reflection device will be described below with reference to Figs. 5 to 8. Generally, said laser apparatus incorporating the anti-reflection device includes: a laser and the laser anti-reflection device as described above, wherein said laser anti-reflection device is disposed in the outgoing light path of said laser for separating the laser beam returning to said laser along the original path due to workpiece reflection during workpiece processing.

Of course, the laser apparatus incorporating the anti-reflection device may further include: one or more systems of an optical collimation system disposed between the laser and the laser anti-reflection device, an optical focusing system disposed between the laser anti-reflection device and the workpiece to be processed, and at least one reflection or refraction systems disposed between the laser and the workpiece to be processed. These systems are configured to collimate, focus the light beam and regulate the light path of the light beam to meet practical demands.

### Embodiment of the present invention

Fig. 5 is a schematic diagram showing the light path structure of the laser apparatus incorporating the laser anti-reflection device according to the present invention. The laser apparatus incorporating the laser anti-reflection device includes: a CO₂ laser 300 and a laser anti-reflection device as described above disposed in the outgoing light path of the laser.

As shown in Fig. 5, in the above-mentioned laser apparatus with a CO₂ laser being the said laser, the polarizing beam splitter 10 in the laser anti-reflection device is made of a coated mirror in which a polarizing beam splitting film is coated on a substrate such as a ZnSe or GaAs substrate, and it is a polarizing beam splitter reflecting P and transmitting S linearly polarized light; and the λ/4 wave plate 20 is made of a bronze mirror plated with a λ/4 retardation film, and is a reflective wave plate. In addition, it is further possible to provide a reflective bronze mirror 50 and a reflective focusing mirror 60 between the laser anti-reflection device and the workpiece 200 to regulate the light path and focus the light beam. For cooling the above-mentioned optical elements, it is further possible to provide a cooling water pipe (not shown) on the optical elements such as said bronze mirror 20 plated with a λ/4 retardation film and/or said reflective bronze mirror 50.

As shown in Fig. 5, the linearly polarized light beam emitted from the CO₂ laser 300 passes the anti-reflection device, then passes the light path regulating device (i.e., the reflective bronze mirror 50) and the focusing device (i.e., the reflective focusing mirror 60), and reaches the workpiece 200 to be processed. A part of light reflected from the workpiece 200 and returning along the original light path deviates from the outgoing light path of the laser due to the anti-reflection device, and reaches the absorber 30, which prevents the reflected light from damaging the laser 300. The working principle of said anti-reflection device is described before, and will not be repeated here.

### Example 5, not falling under the scope of the present invention

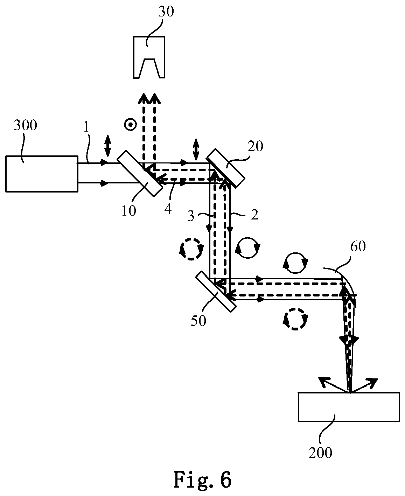

Fig. 6 is a schematic diagram showing the light path structure of the laser apparatus incorporating the laser anti-reflection device, In this example, the laser apparatus incorporating the laser anti-reflection device includes: a CO₂ laser 300 and a laser anti-reflection device as described above disposed in the outgoing light path of said laser. The present example differs from the embodiment according to the present invention in that, the polarizing beam splitter 10 is a polarizing beam splitter transmitting P and reflecting S linearly polarized light, other than which the configuration is the same as that in the embodiment according to the present invention, therefore the detail description will not be provided here.

### Example 6, not falling under the scope of the present invention

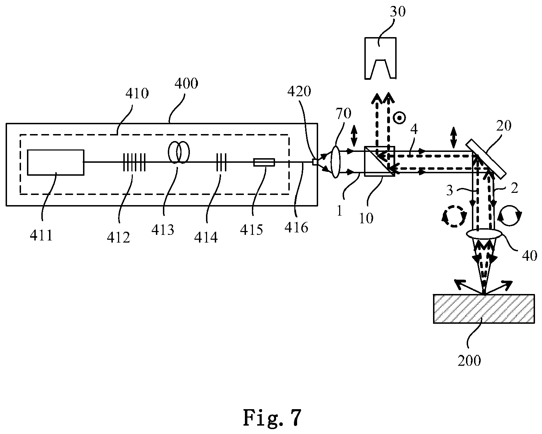

Fig. 7 is a schematic diagram showing the light path structure of the laser apparatus incorporating the laser anti-reflection device. In this example, the laser apparatus incorporating the laser anti-reflection device includes: a linearly polarized optical fiber laser 400 and a laser anti-reflection device as described above disposed in the outgoing light path of the laser.

As shown in Fig. 7, said linearly polarized optical fiber laser 400 may include a linearly polarized optical fiber laser unit 410 and an fiber endcap 420 coupled with the output fiber 416 of the linearly polarized optical fiber laser unit 410. Said linearly polarized optical fiber laser unit 410 may include: a semiconductor pumping source with tail fiber 411, a signal light reflection polarization maintaining optical fiber grating 412, a polarization maintaining doped fiber 413, an output coupling polarization maintaining optical fiber grating 414, and a pumping light detacher 415. The tail fiber of the semiconductor pumping source with tail fiber 411 is fused with one end of the signal light reflection polarization maintaining optical fiber grating 412, and the other end of the signal light reflection polarization maintaining optical fiber grating 412 is fused with one end of the polarization maintaining doped fiber 413, the other end of the polarization maintaining doped fiber 413 is fused with one end of the output coupling polarization maintaining optical fiber grating 414, the other end of the output coupling polarization maintaining optical fiber grating 414 is fused with one end of the pumping light detacher 415, the other end of the pumping light detacher 415 forms the output fiber 416 of the linearly polarized optical fiber laser unit 410.

In the above-mentioned laser apparatus in which said laser is a linearly polarized laser 400, the polarizing beam splitter 10 in the laser anti-reflection device is made of a prism, and is a polarizing beam splitter transmitting P and reflecting S linearly polarized light. The λ/4 wave plate 20 is a reflective wave plate.

As shown in Fig. 7, the linearly polarized light beam emitted from the linearly polarized optical fiber laser 400 is collimated by an optical collimation system 70 before it enters the laser anti-reflection device, and then is focused by the focusing device 40 before it reaches the workpiece 200 to be processed. A part of light reflected from the workpiece 200 and returning along the original light path deviates from the outgoing light path of the laser due to the anti-reflection device, and reaches the absorber 30, which prevents the reflected light from damaging the laser 400. The working principle of said anti-reflection device is described before, and will not be repeated here.

### Example 7, not falling under the scope of the present invention

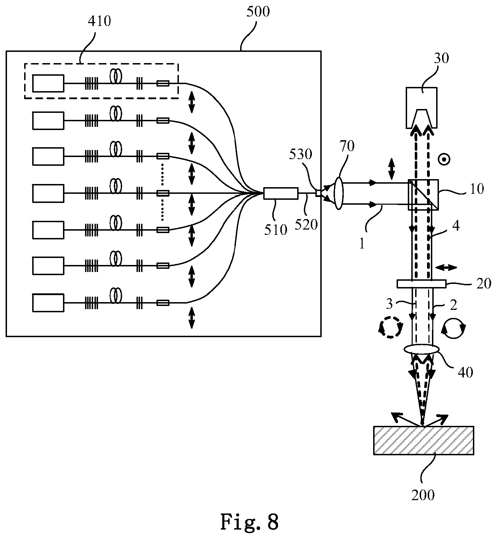

Fig. 8 is a schematic diagram showing the light path structure of the laser apparatus incorporating the laser anti-reflection device. In this example, the laser apparatus incorporating the laser anti-reflection device includes: a polarization maintaining optical fiber laser 500 and a laser anti-reflection device as described above disposed in the outgoing light path of the laser.

As shown in Fig. 8, the polarization maintaining optical fiber laser 500 may include: a plurality of linearly polarized optical fiber laser units 410, a polarization maintaining optical fiber combiner 510, a large core diameter matching polarization maintaining optical fiber 520 and an optical fiber endcap 530. Output fibers of said plurality of linearly polarized optical fiber laser units 410 are combined together at one end of the polarization maintaining optical fiber combiner 510, the other end of the combiner 510 is fused with one end of the large core diameter matching polarization maintaining optical fiber 520, the other end of the fiber 520 is coupled with the fiber endcap 530. The polarization maintaining optical fiber combiner 510 may be a device formed by subjecting polarization maintaining optical fibers (not shown) that match the output fibers of the plurality of the linearly polarized optical fiber laser units 410 to a fused tapering process and then fusing them with the large core diameter matching polarization maintaining optical fiber 520.

In the above-mentioned laser apparatus in which said laser is a polarization maintaining optical fiber laser 500, the polarizing beam splitter 10 in the laser anti-reflection device is made of a prism, and is a polarizing beam splitter reflecting P and transmitting S linearly polarized light. The λ/4 wave plate 20 is a transmissive wave plate.

As shown in Fig. 8, the linearly polarized light beam emitted from the polarization maintaining optical fiber laser 500 is collimated by an optical collimation system 70 before it enters the laser anti-reflection device, and then is focused by the focusing device 40 before it reaches the workpiece 200 to be processed. A part of light reflected from the workpiece 200 and returning along the original light path deviates from the outgoing light path of the laser due to the anti-reflection device, and reaches the absorber 30, which prevents the reflected light from damaging the laser 500. The working principle of said anti-reflection device is described before, and will not be repeated here.

The above-mentioned polarization maintaining optical fiber laser 500 includes a plurality of linearly polarized optical fiber laser units 410, and each of the linearly polarized optical fiber laser units 410 is separated. Therefore, the damage to an individual unit 410 can only impose some influence on the total power of the final output of the laser, but will not impose a determinant influence on the output of the whole optical fiber laser. Thus, the above-mentioned polarization maintaining optical fiber laser with the anti-reflection device has high system stability.

In addition, the laser apparatus incorporating the anti-reflection device of the present invention may include: a semiconductor laser or an array of semiconductor lasers and an aforementioned laser anti-reflection device disposed in the outgoing light path of the laser or the array of lasers. The detailed description thereof will not be provided here.

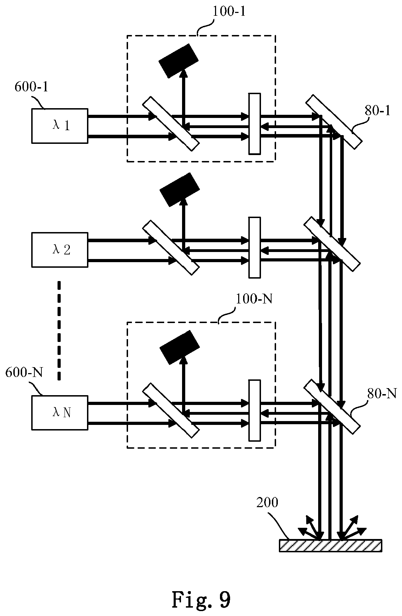

A laser apparatus incorporating the anti-reflection device, provided in the present invention, will be described below with reference to Fig. 9.

### Embodiment of the present invention

Fig. 9 is a schematic diagram showing the light path structure of a laser apparatus incorporating a laser anti-reflection device. As shown in Fig. 9, the laser apparatus incorporating the anti-reflection device includes: N lasers 600-1∼600-N, wherein N is a natural number, N≥2, and the i^{th} laser emits linearly polarized light with a wavelength of λᵢ, i being a natural number, 1≤ i≤N; N aforementioned laser anti-reflection devices 100-1∼100-N, wherein the i^{th} laser anti-reflection device corresponds to the i^{th} laser and is disposed in the outgoing light path of the laser; and N beam combiners 80-1∼80-N, wherein the first beam combiner 80-1 corresponds to the first laser 600-1 and reflects or refracts light with a wavelength of λ₁; the j^{th} beam combiner corresponds to the j^{th} laser, j being a natural number, 2≤j≤N, the j^{th} beam combiner reflects or refracts light with a wavelength of λⱼ and transmits light with a wavelength of λᵢ, wherein 1≤ i<j≤N. The linearly polarized light beams emitted from said N lasers 600-1∼600-N pass their corresponding laser anti-reflection devices, respectively, and then pass their corresponding beam combiners, respectively, before they are combined into one beam of light and reach the workpiece 200 to be processed.

The first beam combiner 80-1 mentionned above may be omitted. If the first beam combiner 80-1 is omitted, and thus the first laser 600-1 corresponds to no beam combiner, then the linearly polarized light beam emitted from the first laser 600-1 passes its corresponding laser anti-reflection device 100-1 and directly merges into the light beams exiting from other lasers, passing their respective corresponding laser anti-reflection devices and their respective corresponding beam combiners to form one beam of light. Specifically, in Fig. 9, if there is no first beam combiner 80-1, then the branch light path constituted by the first laser 600-1 and the first laser anti-reflection device 100-1 may be clockwisely rotated 90°, so that the linearly polarized light beam emitted from the first laser 600-1 passes the laser anti-reflection device 100-1 and directly merges into the light beams exiting from other lasers, passing their respective corresponding laser anti-reflection devices and their respective corresponding beam combiners to form one beam of light.

The laser apparatus according to the present invention have been described by way of example with reference to drawings. However, those skilled in the art should understand that various modifications may be made to the laser anti-reflection device and the laser apparatus incorporating the same according to the present invention without departing from the contents of the present invention. Therefore, the scope of the present invention is defined according to the appended claims.

## Claims

1. A laser apparatus incorporating an anti-reflection device, comprising: a laser and a laser anti-reflection device, wherein said laser anti-reflection device is disposed in the outgoing light path of said laser for separating the laser beam returning to said laser along the original path due to workpiece reflection during workpiece processing, wherein the laser anti-reflection device comprises: a polarizing beam splitter (10), a λ/4 wave plate (20) and an absorber (30), wherein said polarizing beam splitter (10) and said λ/4 wave plate (20) are configured to be disposed in the outgoing light path of a laser emitting a linearly polarized light beam with a wavelength of λ, such that the linearly polarized light beam exiting from the laser first passes the polarizing beam splitter (10), then passes the λ/4 wave plate (20) and becomes a circularly polarized light beam, the circularly polarized light beam reaches a workpiece (200) to be processed, a part of the circularly polarized light beam reflected from the workpiece (200) returns along the original light path, passes the λ/4 wave plate (20) and becomes a linearly polarized light beam with a polarization direction perpendicular to that of the outgoing linearly polarized light beam, the linearly polarized light beam deviates from the light path of the outgoing linearly polarized light beam after it passes the polarizing beam splitter (10) and reaches the absorber (30);
being **characterised in that**:
said polarizing beam splitter (10) is composed of a coated mirror or a prism in which a polarization light splitting film is coated on a ZnSe or GaAs substrate,
said polarizing beam splitter (10) is a polarizing beam splitter transmitting P linearly polarized light and reflecting S linearly polarized light or a polarizing beam splitter transmitting S linearly polarized light and reflecting P linearly polarized light, and said laser is a CO₂ laser.

2. The laser apparatus incorporating an anti-reflection device of claim 1, wherein said λ/4 wave plate (20) is a transmissive λ/4 wave plate (20) or a reflective λ/4 wave plate.

3. The laser apparatus incorporating an anti-reflection device of claim 1, wherein said absorber is a perfect absorber for the linearly polarized light beam illuminating thereon with its light absorption surface forming an arbitrary angle with the linearly polarized light beam, or said absorber is a partial absorber for said linearly polarized light beam illuminating thereon with its light absorption surface forming a non-right angle with the linearly polarized light beam.

4. The laser apparatus incorporating an anti-reflection device of claim 1, further comprising: one or more systems of an optical collimation system disposed between said laser and said laser anti-reflection device, an optical focusing system disposed between said laser anti-reflection device and said workpiece (200) to be processed, and at least one reflection or refraction systems disposed between said laser and said workpiece (200) to be processed.

5. The laser apparatus incorporating an anti-reflection device of claim 1, wherein said λ/4 wave plate (20) is a bronze mirror plated with a λ/4 retardation film and/or said reflection or refraction system is a reflective bronze mirror.

6. The laser apparatus incorporating an anti-reflection device of claim 5, wherein said bronze mirror plated with a λ/4 retardation film and/or said reflective bronze mirror is provided with a cooling water pipe.

7. A laser apparatus incorporating an anti-reflection device, comprising:
N lasers, wherein N is a natural number, N≥2, and the i^{th} laser emits linearly polarized light with a wavelength of λᵢ, i being a natural number, 1≤i≤N;
N laser anti-reflection devices, wherein the i^{th} laser anti-reflection device corresponds to the i^{th} laser and is disposed in the outgoing light path of the laser for separating the laser beam returning to said laser along the original path due to workpiece reflection during workpiece processing, wherein each of the N laser anti-reflection devices comprising: a polarizing beam splitter (10), a λ/4 wave plate (20) and an absorber (30), wherein said polarizing beam splitter (10) and said λ/4 wave plate (20) are configured to be disposed in the outgoing light path of a laser emitting a linearly polarized light beam with a wavelength of A, such that the linearly polarized light beam exiting from the laser first passes the polarizing beam splitter (10), then passes the λ/4 wave plate (20) and becomes a circularly polarized light beam, the circularly polarized light beam reaches a workpiece (200) to be processed, a part of the circularly polarized light beam reflected from the workpiece (200) returns along the original light path, passes the λ/4 wave plate (20) and becomes a linearly polarized light beam with a polarization direction perpendicular to that of the outgoing linearly polarized light beam, the linearly polarized light beam deviates from the light path of the outgoing linearly polarized light beam after it passes the polarizing beam splitter (10) and reaches the absorber, said polarizing beam splitter (10) is composed of a coated mirror or a prism in which a polarization light splitting film is coated on a ZnSe or GaAs substrate, said polarizing beam splitter (10) is a polarizing beam splitter transmitting P linearly polarized light and reflecting S linearly polarized light or a polarizing beam splitter transmitting S linearly polarized light and reflecting P linearly polarized light, and said laser is a CO₂ laser; and
at least N-1 beam combiners, wherein the j^{th} beam combiner corresponds to the j^{th} laser, j being a natural number, 2≤j≤N, the j^{th} beam combiner reflects or refracts light with a wavelength of λⱼ and transmits light with a wavelength of λᵢ, wherein 1≤i<j≤N,
wherein, the linearly polarized light beams emitted from said N lasers pass their corresponding laser anti-reflection devices, respectively, and then pass their corresponding beam combiners, respectively, before they are combined into one beam of light and reach the workpiece (200) to be processed, wherein if the first laser corresponds to no beam combiner, then the linearly polarized light beam emitted from the first laser passes its corresponding laser anti-reflection device and directly merges into the light beams exiting from other lasers, passing their respective corresponding laser anti-reflection devices and their respective corresponding beam combiners to form one beam of light.

8. The laser apparatus incorporating an anti-reflection device of claim 7, further comprising a first beam combiner corresponding to said first laser and reflecting or refracting light with a wavelength of λ₁.

## Patentansprüche

1. Lasergerät mit einer eingebauten Antireflexionsvorrichtung, aufweisend: einen Laser und einer Laser-Antireflexionsvorrichtung, wobei die Laser-Antireflexionsvorrichtung im ausgehenden Strahlpfad des Lasers angeordnet ist, um den Laserstrahl, der aufgrund der Werkstückreflexion während der Werkstückbearbeitung entlang des ursprünglichen Pfades zum Laser zurückstrahlt, zu trennen,
wobei die Laser-Antireflexionsvorrichtung umfasst: einen polarisierenden Strahlteiler (10), eine λ/4-Wellenplatte (20) und einen Absorber (30), wobei der polarisierende Strahlteiler (10) und die λ/4-Wellenplatte (20) so konfiguriert sind, dass sie im ausgehenden Strahlpfad eines Lasers angeordnet sind, der einen linear polarisierten Lichtstrahl mit einer Wellenlänge von λ emittiert, so dass der linear polarisierte Lichtstrahl, der aus dem Laser austritt, zuerst den polarisierenden Strahlteiler (10) passiert, dann die λ/4-Wellenplatte (20) passiert und zu einem zirkular polarisierten Lichtstrahl wird, der zirkular polarisierte Lichtstrahl ein zu bearbeitendes Werkstück (200) erreicht, ein Teil des zirkular polarisierten Lichtstrahls, der von dem Werkstück (200) reflektiert wird, entlang des ursprünglichen Lichtpfads zurückkehrt, die Wellenplatte (20) λ/4 passiert und zu einem linear polarisierten Lichtstrahl mit einer Polarisationsrichtung senkrecht zu der des austretenden linear polarisierten Lichtstrahls wird, der linear polarisierte Lichtstrahl von dem Strahlpfad des austretenden linear polarisierten Lichtstrahls abweicht, nachdem er den polarisierenden Strahlteiler (10) passiert hat und den Absorber (30) erreicht,
**dadurch gekennzeichnet, dass**
der polarisierende Strahlteiler (10) aus einem beschichteten Spiegel oder einem Prisma besteht, bei dem ein Polarisationslicht spaltender Film auf ein ZnSe- oder GaAs-Substrat aufgetragen ist,
der polarisierende Strahlteiler (10) ein polarisierender Strahlteiler ist, der P linear polarisiertes Licht ausstrahlt und S linear polarisiertes Licht reflektiert, oder ein polarisierender Strahlteiler ist, der S linear polarisiertes Licht ausstrahlt und P linear polarisiertes Licht reflektiert, und
der Laser ein CO₂ Laser ist.

2. Das Lasergerät mit einer Antireflexionsvorrichtung gemäß Anspruch 1, wobei die λ/4-Wellenplatte (20) eine ausstrahlende λ/4-Wellenplatte (20) oder eine reflektierende λ/4-Wellenplatte ist.

3. Das Lasergerät mit einer Antireflexionsvorrichtung gemäß Anspruch 1, wobei der Absorber ein perfekter Absorber für den darauf einstrahlenden linear polarisierten Lichtstrahl ist, wobei seine Lichtabsorptionsfläche einen beliebigen Winkel mit dem linear polarisierten Lichtstrahl bildet, oder der Absorber ein Teilabsorber für den darauf einstrahlenden linear polarisierten Lichtstrahl ist, wobei seine Lichtabsorptionsfläche einen nicht-rechten Winkel mit dem linear polarisierten Lichtstrahl bildet.

4. Das Lasergerät mit einer Antireflexionsvorrichtung gemäß Anspruch 1, weiterhin folgendes umfassend: ein oder mehrere Systeme eines optischen Kollimationssystems, das zwischen dem Laser und der Laser-Antireflexionsvorrichtung angeordnet ist, ein optisches Fokussiersystem, das zwischen der Laser-Antireflexionsvorrichtung und dem zu bearbeitenden Werkstück (200) angeordnet ist, und mindestens einem Reflexions- oder Refraktionssystems, das zwischen dem Laser und dem zu bearbeitenden Werkstück (200) angeordnet ist.

5. Das Lasergerät mit einer Antireflexionsvorrichtung gemäß Anspruch 1, wobei es sich bei der λ/4-Wellenplatte (20) um einen mit einem λ/4-Verzögerungsfilm beschichteten Bronzespiegel handelt und/oder das Reflexions- oder Refraktionssystem ein reflektierender Bronzespiegel ist.

6. Das Lasergerät mit einer Antireflexionsvorrichtung gemäß Anspruch 5, wobei der, mit einem λ/4-Verzögerungsfilm beschichtete Bronzespiegel, und/oder der reflektierende Bronzespiegel mit einem Kühlwasserrohr versehen ist.

7. Ein Lasergerät, das eine Antireflexionsvorrichtung enthält, das folgende umfassend:
N Lasern, wobei N eine natürliche Zahl ist, N≥2, und der i^{te} Laser linear polarisiertes Licht mit einer Wellenlänge von λᵢ, emittiert, wobei i eine natürliche Zahl ist, 1≤i≤N;
N Laser-Antireflexionsvorrichtungen, wobei die i^{te} Laser-Antireflexionsvorrichtung dem i^{te} Laser entspricht und im ausgehenden Strahlpfad des Lasers angeordnet ist, um den Laserstrahl zu trennen, der aufgrund der Werkstückreflexion während der Werkstückbearbeitung entlang dem ursprünglichen Pfad zum erwähnten Laser zurückstrahlt, wobei jede der N Laser-Antireflexionsvorrichtungen folgendes umfasst: einen polarisierenden Strahlteiler (10), eine λ/4-Wellenplatte (20) und einen Absorber (30), wobei der erwähnte polarisierende Strahlteiler (10) und die erwähnte λ/4-Wellenplatte (20) so konfiguriert sind, dass sie im ausgehenden Lichtpfad eines Lasers angeordnet sind, der einen linear polarisierten Lichtstrahl mit einer Wellenlänge von λ emittiert, derart, dass der linear polarisierte Lichtstrahl, der aus dem Laser austritt, zuerst den polarisierenden Strahlteiler (10) passiert, dann die λ/4 Wellenplatte (20) passiert und zu einem zirkular polarisierten Lichtstrahl wird, der zirkular polarisierte Lichtstrahl ein zu bearbeitendes Werkstück (200) erreicht, ein Teil des zirkular polarisierten Lichtstrahls, der von dem Werkstück (200) reflektiert wird, entlang dem ursprünglichen Lichtpfad zurückkehrt, die λ/4-Wellenplatte (20) passiert und zu einem linear polarisierten Lichtstrahl mit einer Polarisationsrichtung senkrecht zu der des ausgehenden linear polarisierten Lichtstrahls wird, weicht der linear polarisierte Lichtstrahl vom Lichtpfad des ausgehenden linear polarisierten Lichtstrahls ab, nachdem er den polarisierenden Strahlteiler (10) passiert und den Absorber erreicht hat, der erwähnte polarisierende Strahlteiler (10) aus einem beschichteten Spiegel oder einem Prisma besteht, bei dem ein Polarisationslicht spaltender Film auf ein ZnSe- oder GaAs-Substrat aufgetragen ist, der erwähnte polarisierende Strahlteiler (10) ein polarisierender Strahlteiler ist, der P linear polarisiertes Licht ausstrahlt und S linear polarisiertes Licht reflektiert, oder ein polarisierender Strahlteiler ist, der S linear polarisiertes Licht ausstrahlt und P linear polarisiertes Licht reflektiert, und der erwähnte Laser ein CO₂ Laser ist; und
mindestens N-1 Strahlenkombinatoren, wobei der j^{te} Strahlenkombinator dem j^{te} Laser entspricht, wobei j eine natürliche Zahl ist, 2≤j≤N, der j^{te} Strahlenkombinator Licht mit einer Wellenlänge von λⱼ reflektiert oder refraktiert und Licht mit einer Wellenlänge von λᵢ überträgt, wobei 1≤i≤j≤N,
die linear polarisierten Lichtstrahlen, die von den erwähnten N Lasern ausgestrahlt werden, jeweils ihre entsprechenden Laser-Antireflexionsvorrichtungen passieren und dann jeweils ihre entsprechenden Strahlenkombinatoren passieren, bevor sie zu einem Lichtstrahl kombiniert werden und das zu bearbeitende Werkstück (200) erreichen, wobei, wenn der erste Laser keinem Strahlenkombinatoren entspricht, der linear polarisierte Lichtstrahl, der vom ersten Laser ausgestrahlt wird, seine entsprechende Laser-Antireflexionsvorrichtung passiert und sich dann direkt mit den Lichtstrahlen verschmilzt, die von anderen Lasern austreten, wobei er ihre jeweiligen entsprechenden Laser-Antireflexionsvorrichtungen und ihre jeweiligen entsprechenden Strahlenkombinatoren passiert, um einen Lichtstrahl zu bilden.

8. Das Lasergerät mit einer Antireflexionsvorrichtung gemäß Anspruch 7, weiter aufweisend einen ersten Strahlenkombinator, der dem erwähnten ersten Laser entspricht und Licht mit einer Wellenlänge von λ₁ reflektiert oder refraktiert.

## Revendications

1. Équipement laser incorporant un dispositif anti-reflet, incluant : un laser et un dispositif anti-reflet laser, où dispositif anti-reflet laser est disposé dans le trajet de lumière de sortie dudit laser afin de séparer le faisceau laser revenant vers laser le long du trajet d'origine en raison de la réflexion de la pièce à travail pendant le traitement de la pièce à travail,
dans lequel le dispositif anti-reflet laser comprend : un séparateur de faisceau polarisant (10), une plaque d'onde λ/4 (20) et un absorbeur (30), dans lequel séparateur de faisceau polarisant (10) et ladite plaque d'onde λ/4 (20) sont configurés afin d'être disposés dans le trajet de la lumière sortante d'un laser émettant un faisceau de lumineux à polarisés linéaire avec une longueur d'onde de λ, de telle sorte que le faisceau de lumière à polarisés linéaire sortant du laser traverse au préalable le séparateur de faisceau polarisant (10), puis la plaque d'onde λ/4 (20) et devient un faisceau de lumière à polarisés circulaire, le faisceau de lumière à polarisés circulaire atteignant une pièce à traiter (200), une partie du faisceau lumineux à polarisation circulaire réfléchi par la pièce à traiter (200) revient le long du trajet lumineux d'origine, franchit la plaque d'onde λ/4 (20) et devient un faisceau de lumineux à polarisés linéaire dont la direction de polarisation est perpendiculaire à celle du faisceau de lumineux à polarisés linéaire sortant, le faisceau de lumineux à polarisés linéaire s'écarte du trajet lumineux du faisceau de lumineux à polarisés linéaire sortant après avoir franchi le séparateur de faisceau polarisant (10) et atteint l'absorbeur (30) ;
**se caractérisant par le fait que** :
séparateur de faisceau polarisant (10) est composé d'un miroir revêtu ou d'un prisme dans lequel un film séparateur de lumière polarisante est appliqué sur un substrat de ZnSe ou de GaAs,
séparateur de faisceau polarisant (10) est un séparateur de faisceau polarisant transmettant P de la lumière linéairement polarisée et réfléchissant S de la lumière linéairement polarisée ou un séparateur de faisceau polarisant transmettant S de la lumière linéairement polarisée et réfléchissant P de la lumière linéairement polarisée, et
laser est un laser au CO₂.

2. L'appareil laser comprenant un dispositif anti-reflet de réclamation 1, dans lequel ladite plaque d'onde λ/4 (20) est une plaque d'onde λ/4 (20) transmissive ou une plaque d'onde λ/4 réfléchissante.

3. L'appareil laser comprenant un dispositif anti-reflet de réclamation 1, dans lequel absorbeur est un absorbeur parfait pour le faisceau de lumineux à polarisés linéaire éclairant celui-ci avec sa surface d'absorption de lumière formant un angle arbitraire avec le faisceau de lumineux à polarisés linéaire, ou absorbeur est un absorbeur partiel pour faisceau de lumineux à polarisés linéaire éclairant celui-ci avec sa surface d'absorption de lumière formant un angle non droit avec le faisceau de lumineux à polarisés linéaire.

4. L'appareil laser comprenant un dispositif anti-reflet de réclamation 1, comprenant en outre : un ou plusieurs systèmes d'un système de collimation optique disposé entre laser et dispositif anti-reflet du laser, un système de focalisation optique disposé entre dispositif anti-reflet du laser et ladite pièce à traiter (200), et au moins un système de réflexion ou de réfraction disposé entre laser et ladite pièce à traiter (200).

5. L'appareil laser comprenant un dispositif anti-reflet de réclamation 1, dans lequel ladite plaque d'onde λ/4 (20) est un miroir en bronze plaqué avec un film de retardement λ/4 et/ou système de réflexion ou de réfraction est un miroir en bronze réfléchissant.

6. L'appareil laser comprenant un dispositif anti-reflet de réclamation 5, dans lequel miroir en bronze plaqué d'un film de retardement λ/4 et/ou miroir en bronze réfléchissant est muni d'un tuyau d'eau de refroidissement.

7. Un appareil laser intégrant un dispositif anti-reflet, comprenant :
N lasers, où N est un nombre naturel, N≥2, et le i^{ème} laser émet une lumière linéairement polarisée avec une longueur d'onde de λᵢ, i étant un nombre naturel, 1≤i≤N ;
N dispositifs anti-reflet laser, où le i^{ème} dispositif anti-reflet laser correspond au i^{ème} laser et est disposé dans le trajet de la lumière sortante du laser afin de séparer le faisceau laser retournant vers laser le long du trajet d'origine en raison de la réflexion de la pièce au cours du traitement de la pièce, où chacun des N dispositifs anti-reflet laser comporte : un séparateur de faisceau polarisant (10), une plaque d'onde λ/4 (20) et un absorbeur (30), où séparateur de faisceau polarisant (10) et ladite plaque d'onde λ/4 (20) sont configurés de manière à être disposés dans le trajet lumineux sortant d'un laser émettant un faisceau de lumineux à polarisés linéaire avec une longueur d'onde de λ, de manière à ce que le faisceau de lumière à polarisés linéaire sortant du laser passe préalablement par le séparateur de faisceau polarisant (10), puis par la plaque d'onde λ/4 (20) et devienne un faisceau de lumière à polarisés circulaire, le faisceau de lumière à polarisés circulaire atteint une pièce à traiter (200), une partie du faisceau de lumière à polarisés circulaire réfléchie par la pièce à traiter (200) retourne le long du trajet lumineux d'origine, passe la plaque d'onde λ/4 (20) et devient un faisceau de lumineux à polarisés linéaire avec une direction de polarisation perpendiculaire à celle du faisceau de lumineux à polarisés linéaire, après avoir passé le séparateur de faisceau polarisant (10) et atteint l'absorbeur, le faisceau de lumineux à polarisés linéaire s'écarte du trajet lumineux du faisceau de lumineux à polarisés linéaire, séparateur de faisceau polarisant (10) est composé d'un miroir revêtu ou d'un prisme dans lequel un film séparateur de lumière polarisante est appliqué sur un substrat de ZnSe ou de GaAs, séparateur de faisceau polarisant (10) est un séparateur de faisceau polarisant transmettant P de la lumière linéairement polarisée et réfléchissant S de la lumière linéairement polarisée ou un séparateur de faisceau polarisant transmettant S de la lumière linéairement polarisée et réfléchissant P de la lumière linéairement polarisée, et laser est un laser au CO2 ; et
au minimum N-1 combinateurs de faisceaux, dans lequel il y'a un j^{ème} combinateur de faisceaux qui correspond au j^{ème} laser, j étant un nombre naturel, 2≤j≤N, le j^{ème} combinateur de faisceaux réfléchit ou réfracte la lumière avec une longueur d'onde de λⱼ et transmet la lumière avec une longueur d'onde de λᵢ, où 1≤i≤j≤N,
où, les faisceau de lumineux à polarisés linéaire émis par lesdits lasers N franchissent respectivement leurs dispositifs anti-reflet laser correspondants, puis traversent respectivement leurs combinateurs de faisceaux correspondants, avant de se combiner en un faisceau de lumière et d'atteindre la pièce à traiter (200), étant entendu que si le premier laser ne correspond à aucun combinateur de faisceaux puis le faisceau de lumineux à polarisés linéaire émis par le premier laser traverse son dispositif anti-reflet laser correspondant et fusionne directement avec les faisceaux de lumière sortant des autres lasers, en passant par leurs dispositifs anti-reflet laser correspondants respectifs et leurs combinateurs de faisceaux correspondants respectifs afin de former un seul faisceau de lumière.

8. L'appareil laser comprenant un dispositif anti-reflet de réclamation 7,
qui comprend également un premier combinateur de faisceau correspondant audit premier laser et réfléchissant ou réfractant la lumière d'une longueur d'onde de λ₁.
